# EUROPEAN PATENT APPLICATION

(11) **EP 2 790 106 A2**
(43) Date of publication of application: **15.10.2014**
(21) Application number: 13190812.1
(22) Date of filing: 30.10.2013
(51) Int. Cl.: G06F 11/34

(54) **Performance measurement unit, processor core including the same and process profiling method**

(30) Priority: 23.11.2012 KR 20120133858
(71) Applicant: Samsung Electronics Co., Ltd, Gyeonggi-do 443-742 (KR); Seoul National University R&DB Foundation, Seoul 151-742 (KR)
(72) Inventor: Lee, Min-Ju, 445-732 Hwaseong-si, Gyeonggi-do (KR); Egger, Bernhard, 151-851 Seoul (KR); Lee, Jae-Jin, 151-851 Seoul (KR); Kim, Young-Lak, 463-953 Seongnam-si, Gyeonggi-do (KR); Kim, Hong-Gyu, 151-744 Seoul (KR); Kim, Hong-June, 151-744 Seoul (KR)
(74) Representative: Kuhnen & Wacker

(57) **Abstract**

A performance measurement unit includes an event counter configured to record a counter value indicating a number of events occurring in a processor core, and a shadowed event counter configured to copy the counter value recorded in the event counter to the shadowed event counter. The performance measurement unit is configured to determine a number of effective events occurring in the processor core using the event counter and the shadowed event counter. Effective events correspond to events occurring when a selected process is executed.

## Description

### CROSS-REFERENCE TO RELATED APPLICATION

This application claims priority under 35 U.S.C. § 119 to Korean Patent Application No. 10-2012-0133858 filed on November 23, 2012, the disclosure of which is incorporated by reference herein in its entirety.

### TECHNICAL FIELD

Exemplary embodiments of the present invention relate to a performance measurement unit, a processor core including the same, and a process profiling method.

### DISCUSSION OF THE RELATED ART

Referring to a central processing unit (CPU) executing instructions, profiling refers to the analysis of an execution status of a program currently running, or a communication status with an operating system (OS) kernel. By utilizing profiling, performance information of the program can be measured, and factors causing performance deterioration can be detected.

### SUMMARY

Exemplary embodiments of the present invention provide a performance measurement unit enabling sophisticated process profiling in a multi-tasking operating system.

Exemplary embodiments of the present invention also provide a processor core including a performance measurement unit enabling sophisticated process profiling in a multi-tasking operating system.

Exemplary embodiments of the present invention also provide a process profiling method enabling sophisticated process profiling in a multi-tasking operating system.

According to an exemplary embodiment of the present invention, a performance measurement unit includes a first event counter recording a counter value indicating the number of events occurring in a processor core, and a second event counter copying the counter value recorded in the first event counter.

According to an exemplary embodiment of the present invention, a performance measurement unit includes an event counter recording a counter value indicating the number of events occurring in a processor core, and a shadowed event counter copying the counter value recorded in the first event counter, wherein the counter value recorded in the event counter is copied to the shadowed event counter in response to a first instruction.

According to an exemplary embodiment of the present invention, a processor core includes a central processing unit (CPU) performing one or more processes, and a performance measurement unit measuring a counter value indicating the number of events occurring while the one or more processes are executed, wherein the performance measurement unit includes a first event counter recording the counter value and a second event counter copying the counter value recorded in the first event counter.

According to an exemplary embodiment of the present invention, a process profiling method includes executing one or more processes by a processor core, recording in a first event counter a counter value indicating the number of events occurring while the one or more processes are executed, and copying the counter value recorded in the first event counter to a second event counter.

According to an exemplary embodiment of the present invention, a performance measurement unit includes an event counter configured to record a counter value indicating a number of events occurring in a processor core, and a shadowed event counter configured to copy the counter value recorded in the event counter to the shadowed event counter. The performance measurement unit is configured to determine a number of effective events occurring in the processor core using the event counter and the shadowed event counter, wherein the effective events correspond to events occurring when a selected process is executed.

According to an exemplary embodiment of the present invention, a performance measurement unit includes an event counter configured to record a counter value indicating a number of events occurring in a processor core, and a shadowed event counter configured to copy the counter value recorded in the event counter to the shadowed event counter. The counter value recorded in the event counter is copied to the shadowed event counter in response to a first instruction. The performance measurement unit is configured to determine a number of effective events occurring in the processor core using the event counter and the shadowed event counter, wherein the effective events correspond to events occurring when a selected process is executed.

According to an exemplary embodiment of the present invention, a processor core includes a central processing unit (CPU) configured to execute one or more processes, and a performance measurement unit configured to measure a counter value indicating a number of events occurring while the one or more processes are executed. The performance measurement unit includes an event counter configured to record the counter value, and a shadowed event counter configured to copy the counter value recorded in the event counter to the shadowed event counter. The performance measurement unit is configured to determine a number of effective events occurring in the processor core using the event counter and the shadowed event counter, wherein the effective events correspond to events occurring when a selected process from among the one or more processes is executed.

According to an exemplary embodiment of the present invention, a process profiling method includes executing, by a processor core, one or more processes, recording, in an event counter, a counter value indicating a number of events occurring while the one or more processes are executed, copying, to a shadowed event counter, the counter value recorded in the event counter, and determining a number of effective events occurring in the processor core using the counter value, wherein the effective events correspond to events occurring when a selected process from among the one or more processes is executed.

According to an exemplary embodiment of the present invention, a process profiling method includes executing, by a processor core, one or more processes, recording, in an event counter, a counter value indicating a number of events occurring while the one or more processes are executed, determining whether a first event has occurred, copying, to a shadowed event counter, the counter value recorded in the event counter upon determining that the first event has occurred, determining whether a second event has occurred upon determining that the first event has not occurred, and copying back, to the event counter, the counter value copied to the shadowed event counter upon determining that the second event has occurred.

### BRIEF DESCRIPTION OF THE DRAWINGS

The above and other features of the present invention will become more apparent by describing in detail exemplary embodiments thereof with reference to the accompanying drawings, in which:

FIG. 1 is a schematic block diagram of a performance measurement unit, according to an exemplary embodiment of the present invention.

FIG. 2 is a schematic block diagram of a performance measurement unit, according to an exemplary embodiment of the present invention.

FIG. 3 is a schematic block diagram of a performance measurement unit, according to an exemplary embodiment of the present invention.

FIG. 4 is a flowchart illustrating a process profiling method, according to an exemplary embodiment of the present invention.

FIG. 5 is a flowchart illustrating a process profiling method, according to an exemplary embodiment of the present invention.

FIGs. 6 to 8 schematically illustrate a change in event counter values caused by a process profiling method, according to exemplary embodiments of the present invention.

FIG. 9 is a schematic block diagram of a processor core, according to an exemplary embodiment of the present invention.

FIG. 10 is a schematic block diagram of a processor core, according to an exemplary embodiment of the present invention.

FIG. 11 is a schematic block diagram of a profiling system including a processor core, according to an exemplary embodiment of the present invention.

FIG. 12 is a schematic block diagram of an electronic system incorporating a processor core, according to an exemplary embodiment of the present invention.

FIGs. 13 and 14 illustrate exemplary electronic systems to which processor cores according to exemplary embodiments of the present invention can be applied.

### DETAILED DESCRIPTION OF THE EXEMPLARY EMBODIMENTS

Exemplary embodiments of the present invention will be described more fully hereinafter with reference to the accompanying drawings. Like reference numerals may refer to like elements throughout the accompanying drawings.

It is to be understood that when a layer is referred to as being "on" another layer or substrate, it can be directly on the other layer or substrate, or intervening layers may also be present.

In the following description, a performance measurement unit (PMU) is one of internal components of a processor core. The PMU is a component configured to measure events that have occurred in the processor core. The events that have occurred in the processor core may be, for example, memory operations (e.g., reads or writes), cache event (e.g., hits, misses or writebacks), execution instructions, etc., however, the events are not limited thereto.

A PMU counter is a register provided within the PMU. The PMU counter counts events occurring in the processor core and records the cumulative values of PMU event counts. The PMU may be programmed in software, and the PMU counter may perform read and write operations using particular assembly instructions.

In the following description, the PMU counter value read from the PMU counter may be used as a hardware PMU count.

In the following description, the PMU counter value may be referred to as an event counter value.

A runtime environment (RTE) and an operating system (OS) may manage hardware and may support multitasking and process scheduling.

Process scheduling refers to execution of multiple processes by dividing a usage time of a central processing unit (CPU) according to the order of priority by the OS kernel supporting a time sharing system. Although exemplary embodiments of the present invention may describe the OS kernel as a Linux® kernel, the OS kernel is not limited thereto.

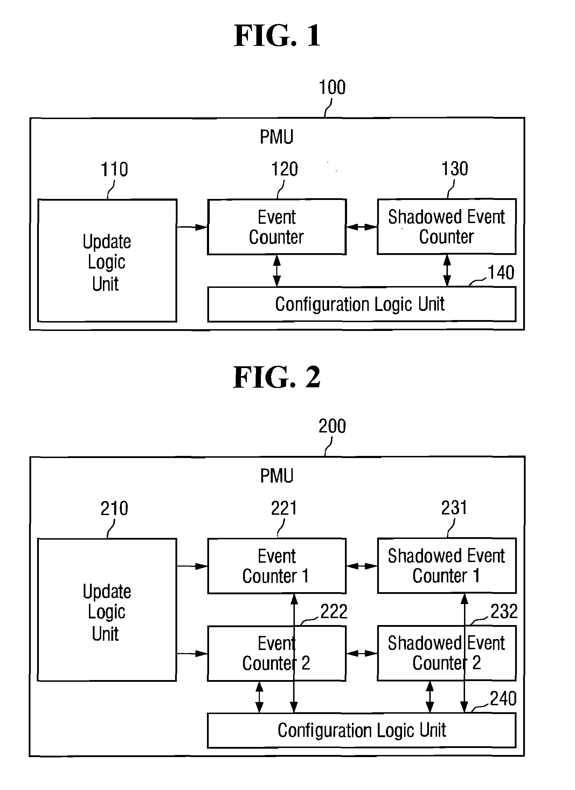

FIG. 1 is a schematic block diagram of a performance measurement unit, according to an exemplary embodiment of the present invention.

Referring to FIG. 1, the performance measurement unit (PMU) 100 may include an update logic unit 110, an event counter 120, a shadowed event counter 130, and a configuration logic unit 140.

The update logic unit 110 cumulatively records counter values recorded in the event counter 120 when events occur in the processor core. When the events occurring in the processor core are counted, the update logic unit 110 updates the counter values recorded in the event counter 120.

The event counter 120 has the counter values recorded therein. The counter values indicate the number of events occurring in the processor core. The counter values recorded in the event counter 120 may be referenced by the OS kernel, which is described in further detail below, using particular assembly instructions.

The shadowed event counter 130 may copy the counter values recorded in the event counter 120. The event counter 120 may copy back the counter values copied to the shadowed event counter 130. The counter values recorded in the shadowed event counter 130 may also be referenced by the OS kernel using particular assembly instructions.

The event counter 120 and the shadowed event counter 130 may be incorporated into the PMU counter.

The configuration logic unit 140 sets the overall operations of the event counter 120 and the shadowed event counter 130.

If the operating mode of the processor core is switched according to the configuration set by the configuration logic unit 140, the counter values recorded in the event counter 120 may be copied to the shadowed event counter 130, or the counter values recorded in the shadowed event counter 130 may be copied to the event counter 120.

Accordingly, when the processor core enters a predetermined first operating mode, the shadowed event counter 130 may copy the counter values recorded in the event counter 120. Alternatively, when the processor core is released from the predetermined first operating mode and enters a predetermined second operating mode, the event counter 120 may copy back the counter values copied in the shadowed event counter 130.

The predetermined first operating mode may be, for example, a kernel mode, and the predetermined second operating mode may be, for example, a user mode.

Referring to the kernel mode, the processor core may not be restricted in accessing other hardware, may directly access a memory, and all instructions of the CPU may be executed. Referring to the user mode, the processor core may be restricted in accessing other hardware or memory, and may indirectly access other hardware or memory through a system API. In addition, the processor core may execute only some instructions of the CPU. Most application programs may be executed in such a user mode.

Even if the operating mode of the processor core is switched according to the configuration set by the configuration logic unit 140, the counter values recorded in the event counter 120 may not be copied to the shadowed event counter 130, and/or the counter values recorded in the shadowed event counter 130 may not be copied to the event counter 120.

Accordingly, when the processor core enters a predetermined first operating mode, the shadowed event counter 130 may be selectively allowed to copy the counter values recorded in the event counter 120. Alternatively, when the processor core is released from the predetermined first operating mode and enters a predetermined second operating mode, the event counter 120 may be selectively allowed to copy back the counter values copied to the shadowed event counter 130.

Furthermore, as will be described in further detail below, a predetermined counter value may be written to the shadowed event counter 130 by the OS kernel using a particular instruction, or may be read from the shadowed event counter 130 by the OS kernel.

In addition to the update logic unit 110, the event counter 120, the shadowed event counter 130 and the configuration logic unit 140, the PMU 100 shown in FIG. 1 may further include a plurality of logic units and registers.

In addition, although the configuration logic unit 140 is a single device in FIG. 1, the configuration logic unit 140 is not limited thereto. For example, the configuration logic unit 140, which sets the operations of the event counter 120 and the shadowed event counter 130, may be separately provided as a first configuration logic unit corresponding to the event counter 120 and a second configuration logic unit corresponding to the shadowed event counter 130.

FIG. 2 is a schematic block diagram of a performance measurement unit, according to an exemplary embodiment of the present invention. For convenience of explanation, the following description may focus on differences between the PMUs shown in FIGs. 1 and 2, and a description of elements previously described may be omitted..

Referring to FIG. 2, the PMU 200 may include a plurality of event counters 221 and 222. In addition, the PMU 200 may include a plurality of shadowed event counters 231 and 232 corresponding to the plurality of event counters 221 and 222. The PMU 200 may further include an update logic unit 210 and a configuration logic unit 240.

A first counter value, e.g., a cumulative value of the counting result of cache hits occurring in the processor core, may be recorded in the first event counter 221, and a second counter value, e.g., a cumulative value of the counting result of cache misses occurring in the processor core, may be recorded in the second event counter 222. However, exemplary embodiments of the present invention are not limited thereto.

In addition, the first shadowed event counter 231 may copy the first counter value recorded in the first event counter 221, and the first event counter 221 may copy back the first counter value copied to the first shadowed event counter 231. The second shadowed event counter 232 may copy the second counter value recorded in the second event counter 222, and the second event counter 222 may copy back the second counter value copied to the second shadowed event counter 232.

Although FIG. 2 illustrates that the PMU 200 includes the first event counter 221 and the second event counter 222, the number of event counters, as well as the number of corresponding shadowed event counters, is not limited thereto. For example, exemplary embodiments may include more than two event counters and more than two corresponding shadowed event counters.

According to the exemplary embodiment shown in FIG. 2, the PMU 200 may include a plurality of event counters according to the specification provided by the manufacturer of the PMU 200, and event counts measured and recorded by the respective event counters may be the same as or different from each other.

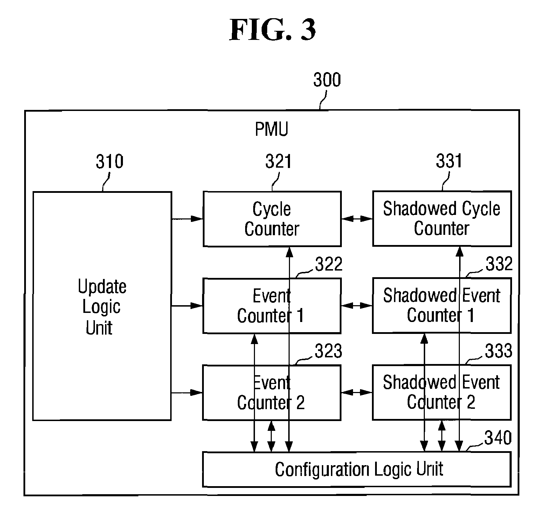

FIG. 3 is a schematic block diagram of a performance measurement unit, according to an exemplary embodiment of the present invention. For convenience of explanation, the following description may focus on differences between the PMUs shown in FIGs. 1 and 3, and a description of elements previously described may be omitted.

Referring to FIG. 3, the PMU 300 may include a cycle counter 321. In addition, the PMU 300 may include a shadowed cycle counter 331 corresponding to the cycle counter 321. The PMU 300 may further include a plurality of event counters 322 and 323, a plurality of shadowed event counters 332 and 333, an update logic unit 310 and a configuration logic unit 340.

The cycle counter 321 may have the counting result of clock cycles generated in a processor core cumulatively recorded therein.

The shadowed cycle counter 331 may copy a cycle count value recorded in the cycle counter 321, and the cycle counter 321 may copy back the cycle count value copied to the shadowed cycle counter 331.

According to the exemplary embodiment shown in FIG. 3, the PMU 300 may include a PMU counter configured to count only a particular event. Although FIG. 3 illustrates that the PMU 300 includes the cycle counter 321, exemplary embodiments of the present invention are not limited thereto. For example, the PMU 300 may also include a cache counter configured to record counting results of cache hits or cache misses.

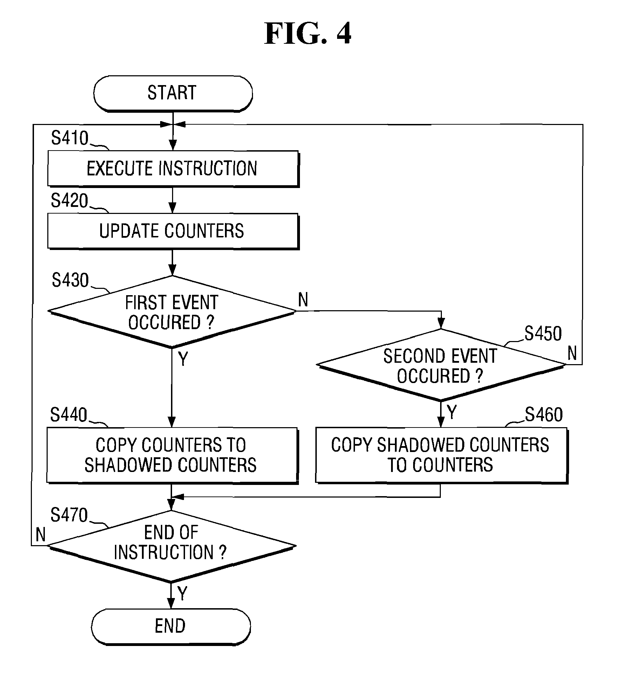

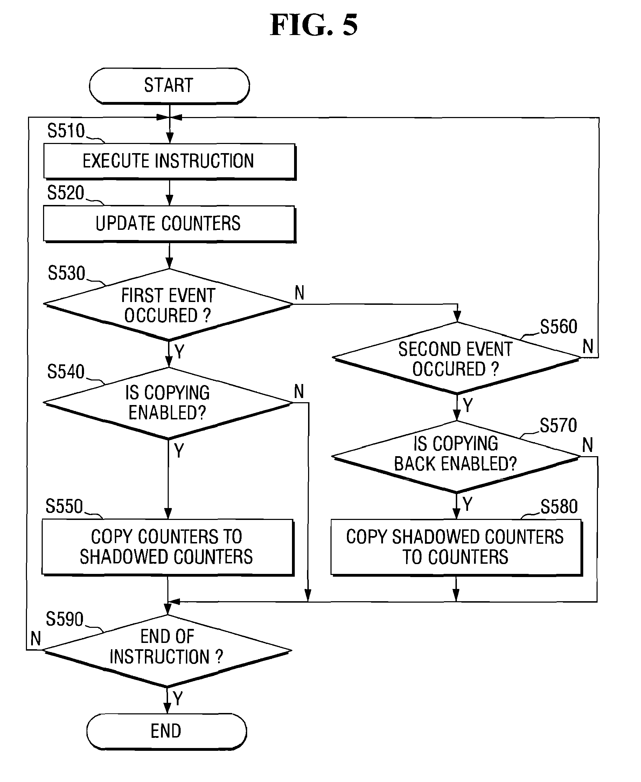

Hereinafter, a process profiling method of an OS kernel using a PMU according to exemplary embodiments of the present invention will be described with reference to FIGs. 4 and 5.

FIG. 4 is a flowchart illustrating a process profiling method, according to an exemplary embodiment of the present invention.

Referring to FIG. 4, at block S410, a processor core executes one or more processes, and instructions included in the one or more processes are executed.

At block S420, the PMU measures counter values of events occurring while the one or more processes are executed, and records the measured counter values in event counters to then update the event counters. As described above, the occurring events may include, for example, clock cycles, memory operations, cache events, execution instructions, etc.

At block S430, the PMU determines whether a first event has occurred. For example, the PMU may determine whether the processor core has entered a kernel mode. The entering of the processor core into a kernel mode may be determined using hardware or software. For example, referring to a hardware implementation, the PMU may include a pin indicating an operating mode of the processor core to determine whether the processor core has entered or has been released from the kernel mode according to the value of the pin. Referring to a software implementation, a variable may be utilized to indicate whether the processor core has entered or has been released from the kernel mode.

If it is determined that the first event has occurred, the PMU copies the counter values recorded in the event counter to a shadowed event counter at block S440.

If it is determined that the first event has not occurred, the PMU determines whether a second event has occurred at block S450. For example, the PMU may determine whether the processor core has been released from the kernel mode and has entered a user mode.

If it is determined that the second event has occurred, the PMU copies the counter values copied to the shadowed event counter back to the event counter at block S460. If it is determined that the second event has not occurred, the processor core executes one or more processes, and instructions included in the one or more processes are executed at block S410. At block S470, the processor core determines whether execution of all of the instructions included in the one or more processes has ended. If it is determined that execution of all of the instructions included in the one or more processes has not ended, block S410 is repeatedly performed.

During the above-described procedure, the OS kernel may reference the counter values recorded in the event counter or the shadowed event counter. In a monitoring process, the counter values may be received from the OS kernel to perform process profiling.

FIG. 5 is a flowchart illustrating a process profiling method, according to an exemplary embodiment of the present invention. For convenience of explanation, the following description may focus on differences between the process profiling methods shown in FIGs. 4 and 5, and a description of processes previously described may be omitted.

Referring to FIG. 5, at block S510, a processor core executes one or more processes, and instructions included in the one or more processes are executed.

At block S520, the PMU measures counter values of events occurring while the one or more processes are executed, and records the measured counter values in event counters to then update the event counters. As described above, the occurring events may include, for example, clock cycles, memory operations, cache events, execution instructions, etc.

At block S530, the PMU determines whether a first event has occurred. For example, the PMU may determine whether the processor core has entered a kernel mode. The entering of the processor core into a kernel mode may be determined using hardware or software. For example, referring to a hardware implementation, the PMU may include a pin indicating an operating mode of the processor core to determine whether the processor core has entered or has been released from the kernel mode according to the value of the pin. Referring to a software implementation, a variable may be utilized to indicate whether the processor core has entered or has been released from the kernel mode.

If it is determined that the first event has occurred, the PMU determines whether the counter values recorded in the event counters are allowed to be copied to shadowed event counters at block S540. The determination of whether to allow the counter values to be copied may be made according to the configuration set by a configuration logic unit.

If the copying of the counter values is enabled, the PMU copies the counter values recorded in the event counters to the shadowed event counters at block S550.

If it is determined that the first event has not occurred, the PMU determines whether a second event has occurred at block S560. For example, the PMU may determine whether the processor core has been released from the kernel mode and has entered a user mode.

If it is determined that the second event has occurred, the PMU determines whether the counter values copied to the shadowed event counters are allowed to be copied back to the event counters at block S570. The determination of whether to allow the counter values to be copied back may be determined according to the configuration set by a configuration logic unit. If it is determined that the second event has not occurred, the processor core executes one or more processes, and instructions included in the one or more processes are executed at block S510.

If the copying back of the counter values is enabled, the PMU copies the counter values copied to the shadowed event counters back to the event counters at block S580.

At block S590, it is determined whether execution of all of the instructions included in the one or more processes has ended. If it is determined that execution of all of the instructions included in the one or more processes has not ended, block S510 is repeatedly performed.

In the process profiling method according to the exemplary embodiment of FIG. 5, copying the counter values recorded in the event counters to the shadowed event counters, and/or copying back the counter values copied to the shadowed event counters to the event counters may be selectively enabled.

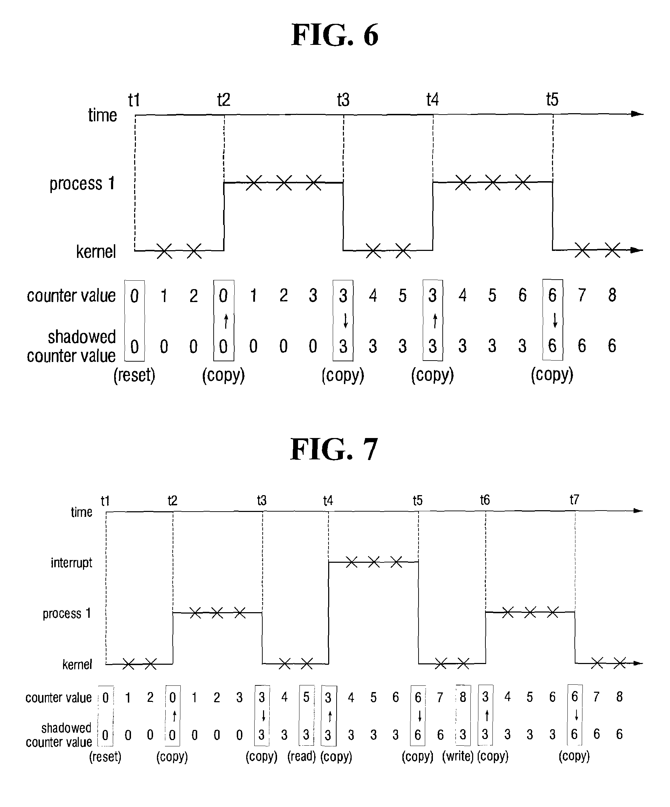

Hereinafter, a change in the event counter values by a process profiling method according to exemplary embodiments of the present invention will be described with reference to FIGs. 6 to 8. FIGs. 6 to 8 schematically illustrate a change in the event counter values caused by a process profiling method, according to exemplary embodiments of the present invention.

Referring to FIG. 6, an operating mode of a processor core may be switched between a user mode and a kernel mode, and a first process (e.g., process 1) is executed in the user mode. In FIG. 6, the occurrence of an event in the processor core is denoted by "×".

Before the first process is executed, at a time t1, a counter value of a shadowed event counter, which may be referred to herein as a shadowed counter value, is reset to 0.

Next, between the time t1 and a time t2, the processor core operates in the kernel mode, and two events may occur. Here, 2 is recorded as the counter value of the event counter measured by the PMU.

At the time t2, the operating mode of the processor core is switched to the user mode from the kernel mode. Here, the shadowed counter value 0 recorded in the shadowed event counter is copied to the event counter, and 0 is recorded as the counter value of the event counter.

Next, between the time t2 and a time t3, the processor core executes the first process while operating in the user mode, and three events may occur. Here, 3 is recorded as the counter value of the event counter measured by the PMU.

At the time t3, the operating mode of the processor core is switched to the kernel mode from the user mode. Here, the counter value of the event counter 3 recorded in the event counter is copied to the shadow event counter, and 3 is recorded as the counter value of the shadow event counter.

Next, between the time t3 and a time t4, the processor core operates in the kernel mode, and two events may occur. Here, 5 is recorded as the counter value of the event counter measured by the PMU.

At the time t4, the operating mode of the processor core is switched to the user mode from the kernel mode. Here, the counter value 3 recorded in the shadowed event counter is copied to the event counter, and 3 is recorded as the counter value of the event counter.

Next, between the time t4 and a time t5, the processor core executes the first process while operating in the user mode, and three events may occur. Here, 6 is recorded as the counter value of the event counter measured by the PMU.

At the time t5, the operating mode of the processor core is switched to the kernel mode from the user mode. Here, the counter value 6 recorded in the event counter is copied to the shadow event counter, and 6 is recorded as the counter value of the shadowed event counter.

In the process profiling method according to exemplary embodiments of the present invention, in a case where a counter value is recorded in the shadowed event counter after the time t5, only effective events occurring when a selected process (e.g., the first process) is executed are counted. As a result, 6 is recorded as the counter value instead of 12, since the PMU according to exemplary embodiments is not limited to measuring events on a processor core basis or a CPU basis.

FIG. 7 shows an exemplary embodiment in which an interrupt routine is additionally performed. For convenience of explanation, the following description may focus on differences between the process profiling methods shown in FIGs. 6 and 7, and a description of processes previously described may be omitted.

Referring to FIG. 7, between a time t3 and a time t4, a processor core operates in a kernel mode, and two events may occur. Here, 5 is recorded as a counter value of the event counter measured by the PMU. Before the processor core executes an interrupt routine responsive to the occurrence of an interrupt, an OS kernel may read 3 as a counter value recorded in the shadowed event counter (e.g., a shadowed counter value) to then be stored.

Next, between the time t4 and a time t5, the processor core executes the interrupt routine, and tree events may occur. Here, 6 is recorded as the counter value of the event counter measured by the PMU.

At the time t5, the operating mode of the processor core is switched to the kernel mode. Here, the counter value 6 recorded in the event counter is copied to the shadow event counter, and 6 is recorded as the counter value of the shadowed event counter.

Next, between the time t5 and a time t6, the processor core operates in the kernel mode, and three events may occur. Here, 8 is recorded as the counter value of the event counter measured by the PMU. After the processor core completes execution of the interrupt routine and before being switched to the user mode, the OS kernel may write 3, which is the counter value previously stored in the shadowed event counter.
At the time t6, the operating mode of the processor core is switched to the user mode from the kernel mode. Here, the counter value 3 recorded in the shadowed event counter is copied to the event counter, and 3 is recorded as the counter value of the event counter.

In the process profiling method according to the exemplary embodiment of FIG.7, even when an interrupt occurs while the first process (e.g., process 1) is executed, the counter value recorded in the shadowed event counter is read before the interrupt routine is executed and is independently stored, and the independently stored counter value is written again after the execution of the interrupt routine is completed. In such a manner, only effective events occurring when a selected process (e.g., the first process) is executed are counted, and as a result, 6 is recorded as the counter value.

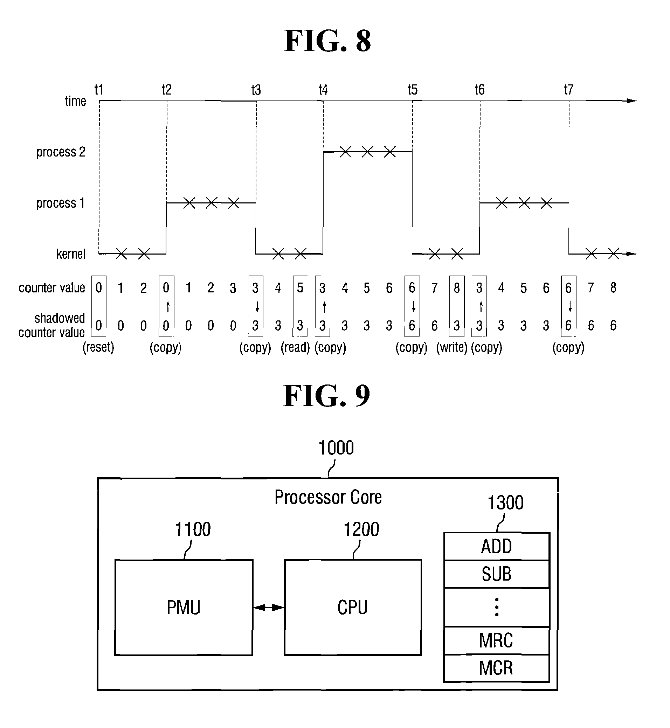

FIG. 8 shows an exemplary embodiment in which a second process, instead of the interrupt routine, is additionally performed.

Referring to FIG. 8, when a processor core performs multi-tasking, that is, when a first process (e.g., process 1) and a second process (e.g., process 2) are concurrently executed, only effective events occurring when the first process is executed are counted in substantially the same manner as in FIG. 7. In this case, the first process is different from a second process, and may be a target process to be profiled by the OS kernel.

Sophisticated process profiling, for example, profiling of a particular process, may be used to allow the OS kernel to perform scheduling.

According to exemplary embodiments, in order for the RTE or OS to perform sophisticated process profiling using a PMU counter, events may be measured directly before a particular process is scheduled, and measuring may be stopped directly after the particular process is scheduled out. In addition, the interrupt occurring in the course of executing the particular process may be excluded from event measuring.

According to exemplary embodiments of the process profiling method, the PMU automatically saves and restores the counter value, thereby enabling sophisticated process profiling.

In addition, since the counter values of the shadowed event counters can be read or written even while handing the interrupt, it may not be necessary to insert the particular code for stopping the event measurement directly before the interrupt routine is executed, and no further overhead may be required.

According to exemplary embodiments, additional hardware elements (e.g., a shadowed event counter) may be implemented using one or more registers.

Hereinafter, a processor core including a PMU according to exemplary embodiments of the present invention will be described.

FIG. 9 is a schematic block diagram of a processor core, according to an exemplary embodiment of the present invention.

Referring to FIG. 9, the processor core 1000 may include a CPU 1200 and a PMU 1100.

The CPU 1200 may execute one or more processes according to the scheduling of the OS kernel. The PMU 1100 measures counter values generated in the processor core 1000 while the CPU 1200 executes one or more processes.

Since the PMU 1100 includes certain similarities to the PMU according to exemplary embodiments shown in FIGs. 1 to 3, a description of elements previously described may be omitted.

The processor core 1000 may provide an instruction set architecture (ISA) 1300 including additional instructions for operating the shadowed event counter.

The processor core 1000 may provide a first instruction to copy the counter value recorded in the event counter to the shadowed event counter. The processor core 1000 may further provide a second instruction to copy back the counter value copied to the shadowed event counter to the event counter. The first instruction and the second instruction may be invoked when operating modes of the processor core 1000 are switched. For example, the first instruction may be invoked when the processor core 1000 enters a kernel mode, and the second instruction may be invoked when the processor core 1000 is released from the kernel mode and enters a user mode.

In addition, the processor core 1000 may provide a third instruction to read counter values recorded in the event counter and the shadowed event counter, and a fourth instruction to write the counter values recorded in the event counter and the shadowed event counter. For example, when the processor core 1000 is an ARM based core, the third instruction may be an MRC instruction, and the fourth instruction may be an MCR instruction. In addition, new factors concerning the shadowed event counter may be added to the MRC or MCR instruction.

In addition, various instructions for configuring copying between the event counter and the shadowed event counter may be provided to the processor core 1000.

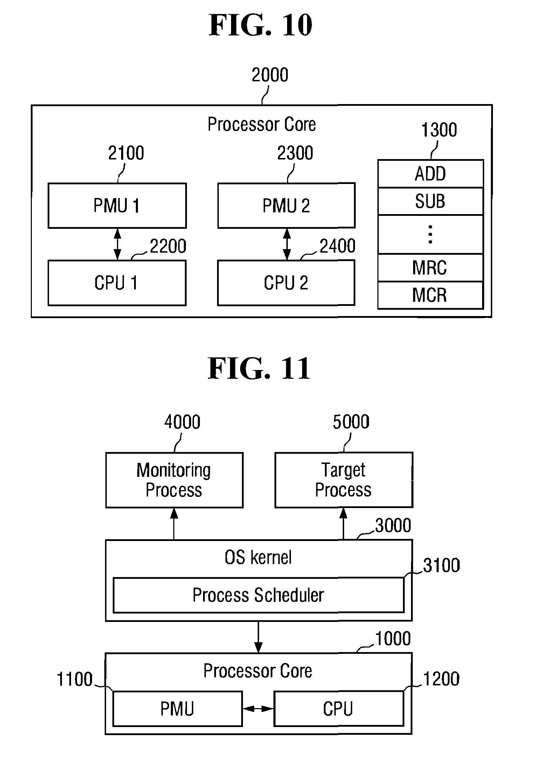

FIG. 10 is a schematic block diagram of a processor core, according to an exemplary embodiment of the present invention. For convenience of explanation, the following description may focus on differences between the processor cores shown in FIGs. 9 and 10, and a description of elements previously described may be omitted.

Referring to FIG. 10, the processor core 2000 may be, for example, a multi processor core. Although the processor core 2000 shown in FIG. 10 includes a first CPU 2200 and a second CPU 2400, the number of CPUs in the multi processor core 2000 is not limited thereto. For example, the multi processor core 2000 may include more than two CPUs. The multi processor core 2000 may also include PMUs 2100 and 2300 corresponding to the CPUs 2200 and 2400, and the ISA 1300.

FIG. 11 is a schematic block diagram of a profiling system including a processor core, according to an exemplary embodiment of the present invention.

Referring to FIG. 11, the profiling system includes a monitoring process 4000, a target process 5000, an OS kernel 3000, and a processor core 1000.

The monitoring process 4000 traces the target process 5000 and monitors events occurring in the processor core 1000 during the course of executing the target process 5000.

The monitoring process 4000 may access an address space of the target process 5000. In an operating system such as, for example, Linux®, general processes cannot directly access address spaces and registers of other user processes. However, the monitoring process 4000 is exceptionally allowed to access the address spaces and registers of other user processes.

Since the monitoring process 4000 may not directly access the OS kernel 3000, in an exemplary embodiment of the present invention, in order to transfer the process event count information collected in the OS kernel 3000 to the monitoring process 4000, the resource usage statistics with the event count information added thereto may be used. However, exemplary embodiments of the present invention are not limited thereto.

In the OS kernel 3000, the resource usage statistics may include data concerning the resource usage statistics of processes such as, for example, struct rusages among wait4 factors of Linux®, however, exemplary embodiments of the present invention are not limited thereto.

The target process 5000 is a user process to be traced by the monitoring process 4000. Although the exemplary embodiment of FIG. 11 includes one target process, the number of target processes is not limited thereto. The processor core 1000 includes a PMU 1100 and a CPU 1200. Since the processor core 1000 includes certain similarities to the processor core shown in FIGs. 9 and 10, a description of elements previously described may be omitted.

The OS kernel 3000 may periodically obtain counter values recorded in the event counter. For example, the OS kernel 3000 may obtain the counter values from the shadowed event counter when the processor core 1000 enters a kernel mode.

Accordingly, the moment the processor core 1000 starts to execute the target process, the OS kernel 3000 may accurately start to measure events.

As described above, the OS kernel 3000 may use the MRC instruction to read the counter value, and may use the MCR instruction to write the counter value.

The process scheduler 3100 of the OS kernel 3000 schedules and executes multiple processes by dividing a usage time of the CPU 1200 according to the order of priority.

The OS kernel 3000 may selectively perform functions of the monitoring process 4000. In this case, various kinds of profiling information may be recorded in the OS kernel 3000.

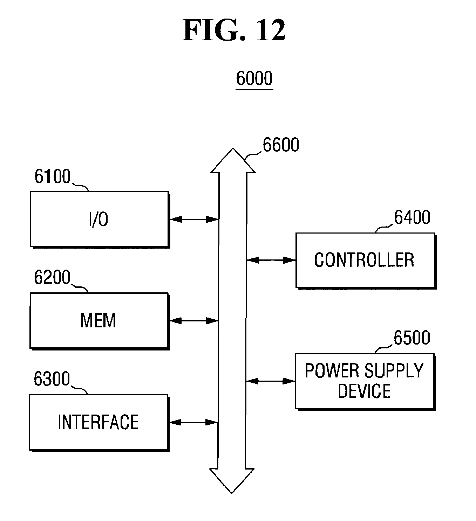

FIG. 12 is a schematic block diagram of an electronic system incorporating a processor core, according to an exemplary embodiment of the present invention.

Referring to FIG. 12, the electronic system 6000 may include a controller 6400, an input/output (I/O) device 6100, a memory device (MEM) 6200, an interface 6300, a power supply device 6500 and a bus 6600. The controller 6400, the I/O device 6100, the memory device 6200, the power supply device 6500 and/or the interface 6300 may be connected to each other through the bus 6600. The bus 6600 corresponds to a path through which data moves.

The controller 6400 may include, for example, at least one of a microprocessor, a digital signal processor, a microcontroller, and logic devices capable of performing similar functions to those performed by these devices. The I/O device 6100 may include, for example, a keypad, a keyboard, a display device, etc. The memory device 6200 may store data and/or instructions. The interface 6300 may transmit and receive data to and from a communication network. The interface 6300 may be wired or wireless. For example, the interface 6300 may include an antenna or a wired/wireless transceiver. The electronic system 6000 may be used as an operating memory for improving the operation of the controller 6400, and may further include, for example, a high-speed DRAM and/or SRAM.

Each of the processor cores according to exemplary embodiments of the present invention shown in FIGs. 9 and 10 may be provided as a component of the controller 6400.

The electronic system 6000 may be, for example, a personal digital assistant (PDA), a portable computer, a tablet computer, a wireless phone, a mobile phone, a smartphone, a digital music player, a memory card, or any type of electronic device capable of transmitting and/or receiving information.

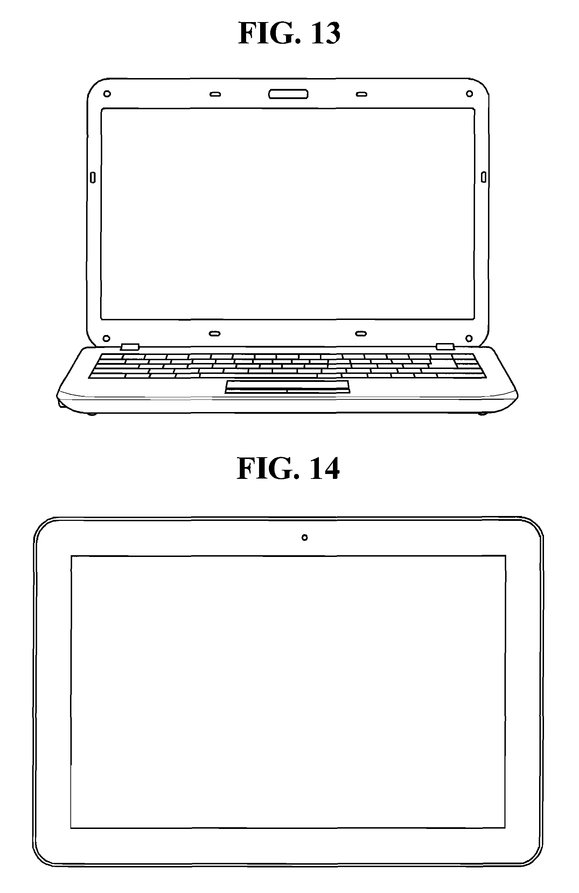

FIGs. 13 and 14 illustrate exemplary electronic systems to which processor cores according to exemplary embodiments of the present invention can be applied. For example, FIG. 13 illustrates a notebook computer and FIG. 14 illustrates a tablet computer. The processor cores according to exemplary embodiments of the present invention can be applied to other integrated circuit devices not illustrated herein.

Exemplary embodiments of the present invention may be embodied directly in hardware, in a software module executed by a processor, or in a combination of the two. A software module may be tangibly embodied on a non-transitory program storage device such as, for example, in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an application specific integrated circuit (ASIC). Additionally, the ASIC may reside in a user terminal.

Alternatively, the processor and the storage medium may reside as discrete components in a user terminal.

While the present invention has been particularly shown and described with reference to the exemplary embodiments thereof, it will be understood by those of ordinary skill in the art that various changes in form and detail may be made therein without departing from the spirit and scope of the present invention as defined by the following claims.

## Claims

1. A performance measurement unit, comprising:
an event counter configured to record a counter value indicating a number of events occurring in a processor core; and
a shadowed event counter configured to copy the counter value recorded in the event counter to the shadowed event counter,
wherein the performance measurement unit is configured to determine a number of effective events occurring in the processor core using the event counter and the shadowed event counter, wherein the effective events correspond to events occurring when a selected process is executed.

2. The performance measurement unit of claim 1, wherein the shadowed event counter is configured to copy the counter value recorded in the event counter to the shadowed event counter upon the processor core entering a predetermined operating mode.

3. The performance measurement unit of claim 2, wherein the predetermined operating mode is an operating system (OS) kernel mode.

4. The performance measurement unit of claim 2, further comprising:
a configuration logic unit configured to selectively allow the counter value recorded in the event counter to be copied to the shadowed event counter.

5. The performance measurement unit of claim 1, wherein the event counter is further configured to copy the counter value copied to the shadowed event counter back to the event counter.

6. The performance measurement unit of claim 5, wherein the event counter is further configured to copy the counter value copied to the shadowed event counter back to the event counter upon the processor core being released from a predetermined operating mode.

7. The performance measurement unit of claim 5, further comprising:
a configuration logic unit configured to selectively allow the counter value copied to the shadowed event counter to be copied back to the event counter.

8. The performance measurement unit of claim 1, further comprising:
an update logic unit configured to cumulatively update the counter value recorded in the event counter upon an event occurring in the processor core.

9. The performance measurement unit of claim 1, wherein the processor core is configured to supply an instruction for copying the event counter value recorded in the event counter to the shadowed event counter.

10. The performance measurement unit of claim 1, wherein the processor core is configured to supply an instruction for copying the counter value copied to the shadowed event counter back to the event counter.
